# EUROPEAN PATENT APPLICATION

(11) **EP 4 053 664 A1**
(43) Date of publication of application: **07.09.2022**
(21) Application number: 22159374.2
(22) Date of filing: 01.03.2022
(51) Int. Cl.: G05D 1/02

(54) **METHOD, APPARATUS, AND COMPUTER PROGRAM FOR DEFINING GEO-FENCING DATA, AND RESPECTIVE UTILITY VEHICLE**

(30) Priority: 05.03.2021 IN 202131009300
(71) Applicant: ZF CV Systems Global GmbH, 3006 Bern (CH)
(72) Inventor: SYED, Aslam, 600075 Chennai (IN)
(74) Representative: Rabe, Dirk-Heinrich

(57) **Abstract**

The present invention is related to a method, an apparatus, and a computer program for defining geo-fencing data. The invention is further related to a utility vehicle, which makes use of such a method or apparatus. In a first step, an image of a scene is acquired (10). Boundaries of an operation area for a utility vehicle are then determined (11) from the image. Subsequently, a user input with regard to the determined boundaries is acquired (12). Finally, geo-fencing data are generated (13) from the determined boundaries and the user input.

## Description

The present invention is related to a method, an apparatus, and a computer program for defining geo-fencing data. The invention is further related to a utility vehicle, which makes use of such a method or apparatus.

Autonomous driving, also referred to as automatic driving, automated driving, or piloted driving, is the movement of vehicles, mobile robots and driverless transport systems that are largely autonomous. There are different degrees of autonomous driving.
- Level 0: "Driver only", the driver drives himself, steers, accelerates, brakes, etc.
- Level 1: Certain assistance systems help with vehicle operation, including a cruise control system such as ACC (Automatic Cruise Control).
- Level 2: Partial automation. Therein, automatic parking, tracking function, general longitudinal guidance, acceleration, deceleration, etc. are taken over by the assistance systems, including collision avoidance.
- Level 3: High automation. The driver does not have to monitor the system continuously. The vehicle independently performs functions such as the triggering of the turn signal, lane change and tracking. The driver can turn to other things, but if requested, the driver has to take over control within a pre-warning period.
- Level 4: Full automation. The guidance of the vehicle is permanently performed by the system. If the system is no longer able to handle the tasks, the driver can be asked to take over control.
- Level 5: No driver required. Apart from setting the target and starting the system, no human intervention is required.

Autonomous driving is not only of interest for road vehicles, but also for agricultural utility vehicles, such as tractors or harvesters. One of the key features for the operation of autonomous farming tractors is geo-fencing. Geo-fencing is used to define the boundaries in agricultural farming tractor operation, i.e., the farming area, in which the autonomous farming operation will take place, needs to be geo-fenced. Path planning then takes place within the area defined by the geo-fences.

In this regard, US 10,386,844 B2 discloses a system for planning a path of a vehicle. The system comprises a location-determining receiver for determining location data representing a current vehicle location and a guidance module for identifying at least one geospatial region encompassing the current vehicle location based on geographical information retrieved from a guidance database. The guidance module is capable of generating a list of potential guidance lines based on the at least one geospatial region, each geospatial region being associated with at least one guidance line, each of the potential guidance lines on the list being ranked based on one or more guidance criteria retrieved from the guidance database. The system further includes a user interface for displaying the guidance lines on the list to an operator of the vehicle for selection of a selected one of the potential guidance lines for controlling the path of the vehicle.

At present, a commonly used approach for defining geo-fences is to capture GPS coordinates (GPS: Global Positioning System) when the driver drives the vehicle in a special geo-fencing mode. In this geo-fencing mode, the driver drives the vehicle along the boundary of the farmland. The GPS sensors of the vehicle capture the coordinates during this driving operation. At the end of the drive, the geo-fencing data is provided as a set of GPS coordinates.

It is an object of the present invention to provide an improved solution for defining geo-fencing data.

The invention is defined by the appended independent claims. The dependent claims include advantageous further developments and improvements of the present principles as described below.

According to a first aspect, a method for defining geo-fencing data comprises:
- acquiring an image of a scene;
- determining boundaries of an operation area for a utility vehicle from the image;
- acquiring a user input with regard to the determined boundaries; and
- generating geo-fencing data from the determined boundaries and the user input.

Accordingly, a computer program comprises instructions, which, when executed by at least one processor, cause the at least one processor to perform the following steps for defining geo-fencing data:
- acquiring an image of a scene;
- determining boundaries of an operation area for a utility vehicle from the image;
- acquiring a user input with regard to the determined boundaries; and
- generating geo-fencing data from the determined boundaries and the user input.

The term computer has to be understood broadly. In particular, it also includes electronic control units, embedded devices, smartphones, tablets and other processor-based data processing devices.

The computer program code can, for example, be made available for electronic retrieval or stored on a computer-readable storage medium.

According to another aspect, an apparatus for defining geo-fencing data comprises:
- an acquisition module configured to acquire an image of a scene;
- an analyzing module configured to determine boundaries of an operation area for a utility vehicle from the image;
- a user interface configured to acquire a user input with regard to the determined boundaries; and
- a processing module configured to generate geo-fencing data from the determined boundaries and the user input.

According to the invention, the geo-fencing data is determined from a captured image of a scene in combination with an input provided by a user via a user interface. This eliminates the need for a human driver to drive along the boundaries of the operation area to identify the geo-fencing data. A major advantage of this approach is that the required human involvement is reduced, thereby eliminating the need for a skilled farming driver.

In an advantageous embodiment, the image is acquired using an image sensor associated with the utility vehicle. For example, the image sensor may be mounted on the utility vehicle or on an unmanned aerial vehicle. An image sensor mounted on the utility vehicle has the advantage that the image is taken from a known position relative to the utility vehicle. Using an unmanned aerial vehicle has the advantage that the image may be taken from greater height, resulting in a better view of the operation area.

In an advantageous embodiment, the image sensor is a stereo camera or a time-of-flight camera. Both types of camera have the advantage that depth information is provided, which simplifies the generation of geo-fencing data.

In an advantageous embodiment, the boundaries are determined from a set of images. This allows coping with situations where the operation area is too large to be captured by a single image.

In an advantageous embodiment, the boundaries are determined using an edge detection algorithm or an image processing algorithm based on machine learning. While edge detection is easy to implement and may be sufficient in case the operation area exhibits well-defined edges, machine learning algorithms are capable of handling situations that are more complex. For example, the machine learning algorithm may make use of a convolutional neural network. Such neural networks are particularly suitable for image processing tasks.

In an advantageous embodiment, acquiring a user input with regard to the determined boundaries comprises presenting the boundaries to a user and receiving a confirmation input or a modification input from the user for the presented boundaries. In this way, the user has the possibility to intervene in case the automatically determined boundaries do not encompass the whole operation area or include an area that shall be exempted from operation.

In an advantageous embodiment, a localization of the utility vehicle is performed with respect to a geo-fenced area defined by the geo-fencing data. Such a determination of the vehicle position with respect to the geo-fenced area is a prerequisite for a subsequent automatic operation of the utility vehicle.

In an advantageous embodiment, a lean map with landmark data is generated for the geo-fenced area. Advantageously, this lean map is provided to a path planning algorithm. In this way, the path planning algorithm is able to create an optimum path in consideration of the selected farm implement.

Further features of the present invention will become apparent from the following description and the appended claims in conjunction with the figures.
- Fig. 1: schematically illustrates a method for defining geo-fencing data;
- Fig. 2: schematically illustrates a first embodiment of an apparatus for defining geo-fencing data;
- Fig. 3: schematically illustrates a second embodiment of an apparatus for defining geo-fencing data;
- Fig. 4: schematically illustrates a utility vehicle in which a solution according to the invention is implemented;
- Fig. 5: shows a system diagram of an automatic farming system; and
- Fig. 6: schematically illustrates a user interface for confirmation or modification of automatically determined boundaries.
The present description illustrates the principles of the present disclosure. It will thus be appreciated that those skilled in the art will be able to devise various arrangements that, although not explicitly described or shown herein, embody the principles of the disclosure.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the diagrams presented herein represent conceptual views of illustrative circuitry embodying the principles of the disclosure.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a combination of circuit elements that performs that function or software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

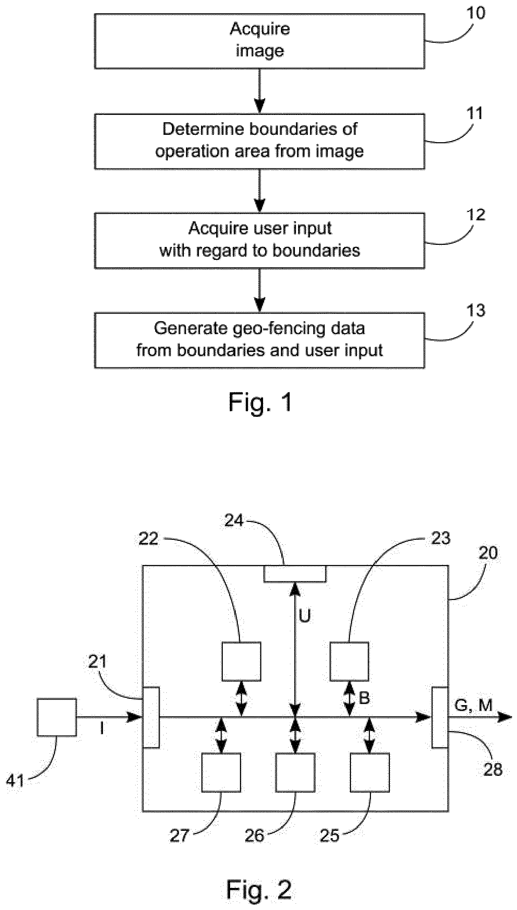

Fig. 1 schematically illustrates a method for defining geo-fencing data. In a first step, an image of a scene is acquired 10. Preferably, the image is acquired using an image sensor associated with a utility vehicle, such as a stereo camera or a time-of-flight camera. For example, the image sensor may be mounted on the utility vehicle or on an unmanned aerial vehicle. Boundaries of an operation area for the utility vehicle are then determined 11 from the image or from a set of images. For this purpose, an edge detection algorithm or an image processing algorithm based on machine learning may be used, for example. Subsequently, a user input with regard to the determined boundaries is acquired 12. To this end, the boundaries may be presented to a user. The user may then provide a confirmation input or a modification input for the presented boundaries. Finally, geo-fencing data are generated 13 from the determined boundaries and the user input. Once the geo-fencing data are available, a localization of the utility vehicle may be performed with respect to a geo-fenced area defined by the geo-fencing data. A lean map with landmark data may then be generated for the geo-fenced area. Advantageously, this lean map is provided to a path planning algorithm.

Fig. 2 schematically illustrates a block diagram of a first embodiment of an apparatus 20 according to the invention for defining geo-fencing data. The apparatus 20 has an input 21 for receiving data. Via the input 21, an acquisition module 22 acquires an image I of a scene. Preferably, the image I is acquired using an image sensor 41 associated with a utility vehicle, such as a stereo camera or a time-of-flight camera. For example, the image sensor may be mounted on the utility vehicle or on an unmanned aerial vehicle. An analyzing module 23 is configured to determine boundaries B of an operation area for the utility vehicle from the image I or from a set of images I. For this purpose, the analyzing module 23 may use an edge detection algorithm or an image processing algorithm based on machine learning, for example. Via a user interface 24, a user input U with regard to the determined boundaries B may be acquired. To this end, the boundaries B may be presented to a user on a display. The user may then provide a confirmation input or a modification input for the presented boundaries B. The display may be part of the apparatus 20 or of a mobile user device connected to the apparatus 20. A processing module 25 is configured to generate geo-fencing data G from the determined boundaries B and the user input U. The geo-fencing data G are preferably made available for further use via an output 28. The output 28 may also be combined with the input 21 into a single bidirectional interface. A local storage unit 27 is provided, e.g. for storing data during processing. Once the geo-fencing data G are available, a localization of the utility vehicle may be performed with respect to a geo-fenced area defined by the geo-fencing data. A lean map M with landmark data may then be generated for the geo-fenced area. Advantageously, this lean map M is provided to a path planning algorithm. Localization of the utility vehicle or generation of the lean map M may be performed by the processing module 25 or by a module external to the apparatus 20.

The acquisition module 22, the analyzing module 23, and the processing module 25 may be controlled by a control module 26. Via the user interface 24, the user may modify settings of the acquisition module 22, the analyzing module 23, the processing module 25, or the control module 26. The acquisition module 22, the analyzing module 23, the processing module 25, and the control module 26 can be embodied as dedicated hardware units. Of course, they may likewise be fully or partially combined into a single unit or implemented as software running on a processor, e.g. a CPU or a GPU.

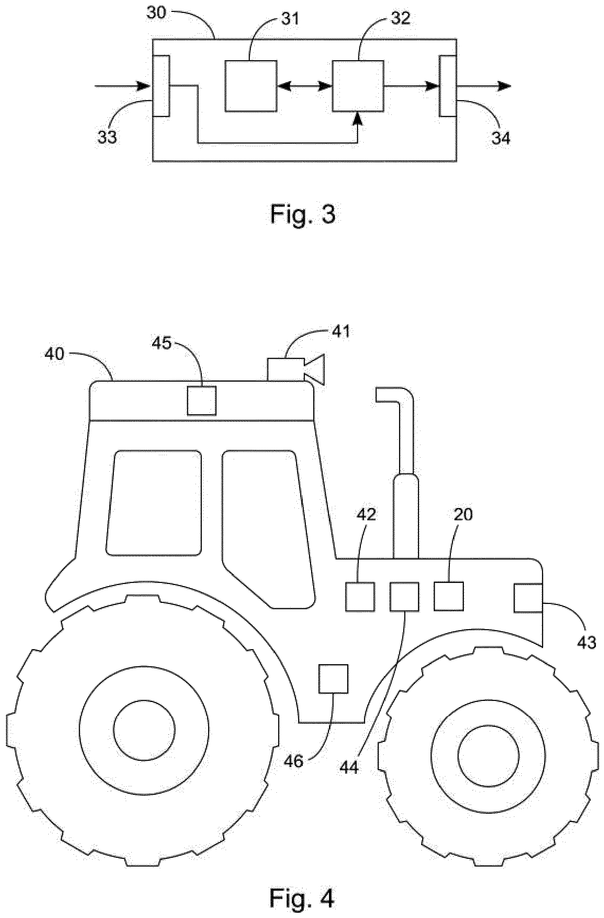

A block diagram of a second embodiment of an apparatus 30 according to the invention for defining geo-fencing data is illustrated in Fig. 3. The apparatus 30 comprises a processing device 31 and a memory device 32. For example, the apparatus 30 may be a computer, an electronic control unit or an embedded system. The memory device 32 has stored instructions that, when executed by the processing device 31, cause the apparatus 30 to perform steps according to one of the described methods. The instructions stored in the memory device 32 thus tangibly embody a program of instructions executable by the processing device 31 to perform program steps as described herein according to the present principles. The apparatus 30 has an input 33 for receiving data. Data generated by the processing device 31 are made available via an output 34. In addition, such data may be stored in the memory device 32. The input 33 and the output 34 may be combined into a single bidirectional interface.

The processing device 31 as used herein may include one or more processing units, such as microprocessors, digital signal processors, or a combination thereof.

The local storage unit 27 and the memory device 32 may include volatile and/or non-volatile memory regions and storage devices such as hard disk drives, optical drives, and/or solid-state memories.

Fig. 4 schematically shows an autonomous or semi-autonomous utility vehicle 40, in this case a tractor, in which a solution in accordance with the invention is implemented. The utility vehicle 40 has an image sensor 41, e.g. a stereo camera or a time-of-flight camera. In this example, the image sensor 41 is mounted on the utility vehicle 40. However, it is likewise possible that the image sensor 41 is mounted on an unmanned aerial vehicle associated with the utility vehicle 40. The utility vehicle 40 further has an autonomous driving controller 42, which makes use of geo-fencing data or a lean map provided by an apparatus 20 for defining geo-fencing data. Environment sensors 43 are provided for collecting environment data. The environment sensors 43 may in particular include ultrasonic sensors, laser scanners, lidar sensors, radar sensors, or additional cameras. Further components of the utility vehicle 40 in this example are a navigation system 44 as well as a data transmission unit 45. By means of the data transmission unit 45, a connection to a backend can be established, e.g. to receive updated program code. A memory 46 is available for storing data. The data exchange between the different components of the utility vehicle 40 may take place via a network (not shown).

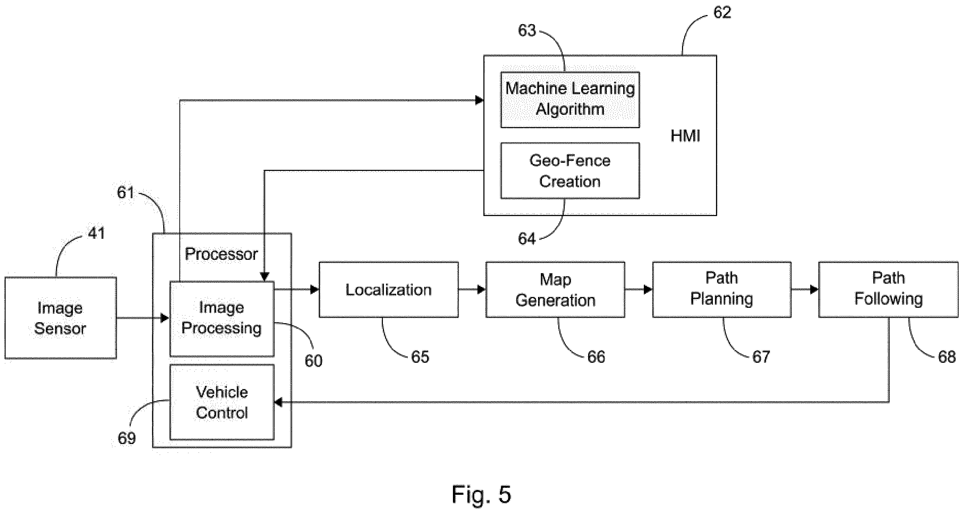

Fig. 5 shows a system diagram of an automatic farming system. An image captured by an image sensor 41 is processed by an image processing block 60 of a processor 61. The processed image is sent to a user device 62 that provides a human-machine interface (HMI), e.g. a tablet or a smartphone. In this user device 62, a machine learning algorithm 63 evaluates the image and determines boundaries of an operation area. The boundaries are then presented to a user on a display of the user device 62. The user may confirm the determined operation area or may choose to modify the determined operation area. For example, the user may propose different boundaries by drawing on top of the 2D image presented on the display, e.g. using a touch functionality of the display. In both cases, geo-fences are created by a geo-fence creation process 64, which are then provided to the processor 61. Based on the received data, the processor 61 will start a localization process 65 to determine the vehicle position with respect to the geo-fenced area. After localization, a map generation process 66 creates a lean map for the geo-fenced area with landmarks. Based on the geo-fenced area, an optimum path is created by a path-planning algorithm 67 in consideration of the selected farm implement. Finally, a path following process 68 will follow the created path to perform the desired farming operation. To this end, the path following process 68 may communicate with a vehicle control block 69 of the processor 61. For example, the path following process 68 may make use of a vison-based SLAM (Simultaneous Localization and Mapping) approach. Such an approach is described, for example, in T. Lemaire et al.: "Vision-Based SLAM: Stereo and Monocular Approaches", International Journal of Computer Vision Vol. 74 (2007), pp. 343-364.

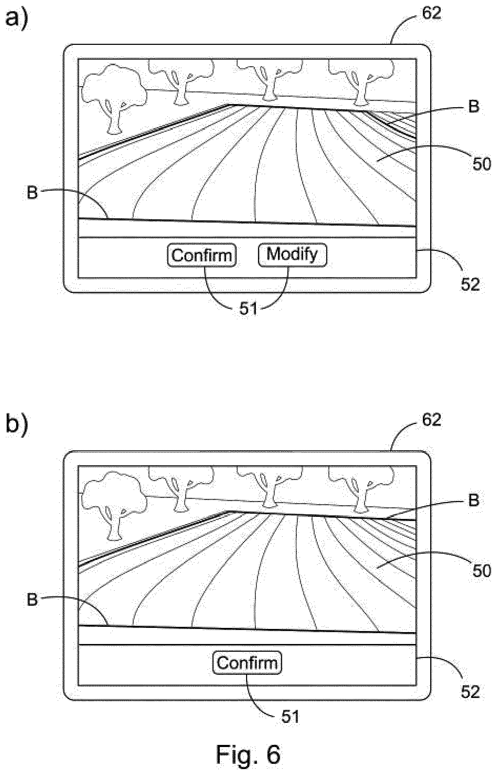

Fig. 6 schematically illustrates a user interface presented on a display 52 of a user device 62 for confirmation or modification of automatically determined boundaries B. As depicted in Fig. 6a), an image of a scene is presented to the user. The image shows an operation area 50, in this case a farming area, together with boundaries B determined from the image by a machine learning algorithm. As can be seen, the automatic determination of the boundaries B has missed the upper right part of the operation area 50. The user now has the option to either confirm or modify the determined boundaries B using two buttons 51 presented on the user interface. For modifying the determined boundaries B, the user may draw on top of the image presented by the user device 62, e.g. using a touch functionality of the display 52 of the user device 62. An example of modified boundaries B is depicted in Fig. 6b). Once the user has finished modification of the boundaries B, a confirmation can be entered using a button 51 presented on the user interface.

### List of Reference signs (part of the specification):

- 10: Acquire image
- 11: Determine boundaries of operation area from image
- 12: Acquire user input with regard to boundaries
- 13: Generate geo-fencing data from boundaries and user input
- 20: Apparatus
- 21: Input
- 22: Acquisition module
- 23: Analyzing module
- 24: User interface
- 25: Processing module
- 26: Control module
- 27: Local storage unit
- 28: Output
- 30: Apparatus
- 31: Processing device
- 32: Memory device
- 33: Input
- 34: Output
- 40: Utility vehicle
- 41: Image sensor
- 42: Autonomous driving controller
- 43: Environment sensors
- 44: Navigation system
- 45: Data transmission unit
- 46: Memory
- 50: Operation area
- 51: Button
- 52: Display
- 60: Image processing block
- 61: Processor
- 62: User device
- 63: Machine learning algorithm
- 64: Geo-fence creation process
- 65: Localization process
- 66: Map generation process
- 67: Path-planning algorithm
- 68: Path following process
- 69: Vehicle control block
- B: Boundary
- G: Geo-fencing data
- I: Image
- M: Map
- U: User input

## Claims

1. A method for defining geo-fencing data (G), the method comprising:
- acquiring (10) an image (I) of a scene;
- determining (11) boundaries (B) of an operation area (50) for a utility vehicle (40) from the image (I);
- acquiring (12) a user input (U) with regard to the determined boundaries (B); and
- generating (13) geo-fencing data (G) from the determined boundaries (B) and the user input (U).

2. The method of claim 1, wherein the image (I) is acquired (10) using an image sensor (41) associated with the utility vehicle (40).

3. The method of claim 2, wherein the image sensor (41) is mounted on the utility vehicle (40) or on an unmanned aerial vehicle.

4. The method of claim 2 or 3, wherein the image sensor (41) is a stereo camera or a time-of-flight camera.

5. The method of one of the preceding claims, wherein the boundaries (B) are determined (11) from a set of images (I).

6. The method of one of the preceding claims, wherein the boundaries (B) are determined (11) using an edge detection algorithm or an image processing algorithm (63) based on machine learning.

7. The method of one of the preceding claims, wherein acquiring (12) a user input (U) with regard to the determined boundaries (B) comprises presenting the boundaries (B) to a user and receiving a confirmation input or a modification input from the user for the presented boundaries (B).

8. The method of one of the preceding claims, further comprising localizing (65) the utility vehicle (40) with respect to a geo-fenced area defined by the geo-fencing data (G).

9. The method of claim 8, further comprising generating (66) a lean map (M) with landmark data for the geo-fenced area.

10. The method of claim 9, further comprising providing the lean map (M) to a path planning algorithm (67).

11. A computer program comprising instructions, which, when executed by a computer, cause the computer to perform a method according to any of claims 1 to 10 for defining geo-fencing data (G).

12. An apparatus (20) for defining geo-fencing data (G), the apparatus (20) comprising:
- an acquisition module (22) configured to acquire (10) an image (I) of a scene;
- an analyzing module (23) configured to determine (11) boundaries (B) of an operation area (50) for a utility vehicle (40) from the image (I);
- a user interface (24) configured to acquire (12) a user input (U) with regard to the determined boundaries (B); and
- a processing module (25) configured to generate (13) geo-fencing data (G) from the determined boundaries (B) and the user input (U).

13. A utility vehicle (40), **characterized in that** the utility vehicle (40) comprises an apparatus (20) according to claim 12 or is configured to perform a method according to any of claims 1 to 10 for defining geo-fencing data (G).
